# EUROPEAN PATENT APPLICATION

(11) **EP 1 091 537 A1**
(43) Date of publication of application: **11.04.2001**
(21) Application number: 99120122.9
(22) Date of filing: 08.10.1999
(51) Int. Cl.: H04L 29/06, H04L 12/56

(54) **Method for sending data of over a packet-switched radio network and a method for receiving data over a packet-switched radio network**

(71) Applicant: SIEMENS AKTIENGESELLSCHAFT, 80333 München (DE)
(72) Inventor: Saxtorph, Jakob, CA 95050 (US)

(57) **Abstract**

The invention relates to a method for sending and a method for receiving data over a packet switched radio network. In an first embodiment of the invention, a signal processor stores the data after performing channel decoding on received data and ciphering on data to be sent. Then, after receiving control data from a control processor, the signal processor performs deciphering on the channel decoded data or channel coding on the ciphered data. In a second embodiment of the invention, the signal processor performs ciphering and channel coding on data to be sent in one step without accepting control data in between.

## Description

### Prior art

The invention relates to a method for sending and a method for receiving data over a packet-switched radio network in accordance with the generic class of the independent claims.

In the draft for the ETSI standard for GSM (GSM 04.60 version 6.0.0, pages 13 to 15), the functions and objectives of the radio link channel (RLC) and MAC (medium access control) are outlined. In these layers, channel coding/decoding, segmentation, error detection and retransmission are performed, channel coding/decoding being outlined in the draft for the ETSI standard for GSM (GSM 05.02).

In another draft of the ETSI standard for GSM (04.64), the functions of the logical link control layer (LLC) are defined. These functions include ciphering, detection of errors and retransmission.

### Advantages of the invention

The method for sending data and the method for receiving data, having the characterising features of the independent patent claims, have the advantage that the data flow between a control processor and a signal processor is minimised. Therefore, resources from both processors are freed. In this way, the data processing in the LLC and RLC/MAC layers is faster and considerably simplified.

In an embodiment of the invention, the data are stored by the signal processor in its memory unit after performing calculations such as ciphering for one layer, until the data have to be further processed. This enables, that the data need not to be transferred between the memory units of the signal processor and the control processor more than once while performing calculating checksum/error detection, ciphering/deciphering and channel coding/decoding.

The features of the dependent patent claims enable further improvements of the invention. It is an advantage that for each subframe a checksum is calculated in a sender, so that for each subframe error detection is performed by a receiver. A subframe is much smaller than a frame, so that in case of an error in a subframe only the affected subframe needs to be retransmitted by the sender. In this way, bandwidth is saved. Only in cases if sender or receiver change the radio cell, the whole frame being affected by this change will be retransmitted.

The invention is improved by the fact that control data, such as data frame size or ciphering key, can be transferred from the control processor to the signal processor in one step or only the control information which is needed in the next processing step.

It is an improvement of the invention that frames and subframes are divided in a frame/subframe header, a user data field and a field for the checksum. By this division error detection, ciphering/deciphering and channel coding/channel decoding are only performed for the necessary parts of the frame/subframe.

The invention is improved by specifying individual segments of a frame to be error protected and to be ciphered. In this way, the processing is reduced leading to a faster device.

### Drawings

Exemplary embodiments of the invention are shown in the figures and elucidated in greater detail in the description below.

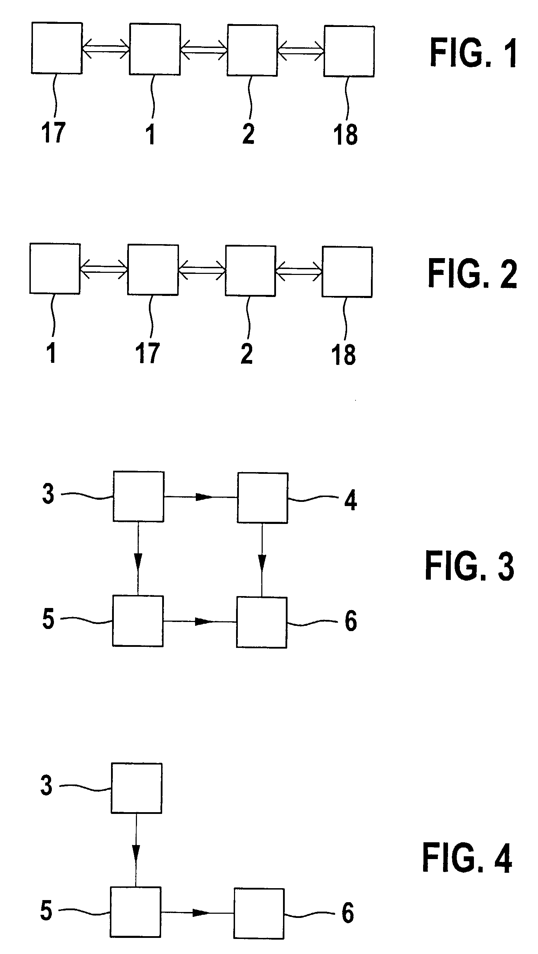

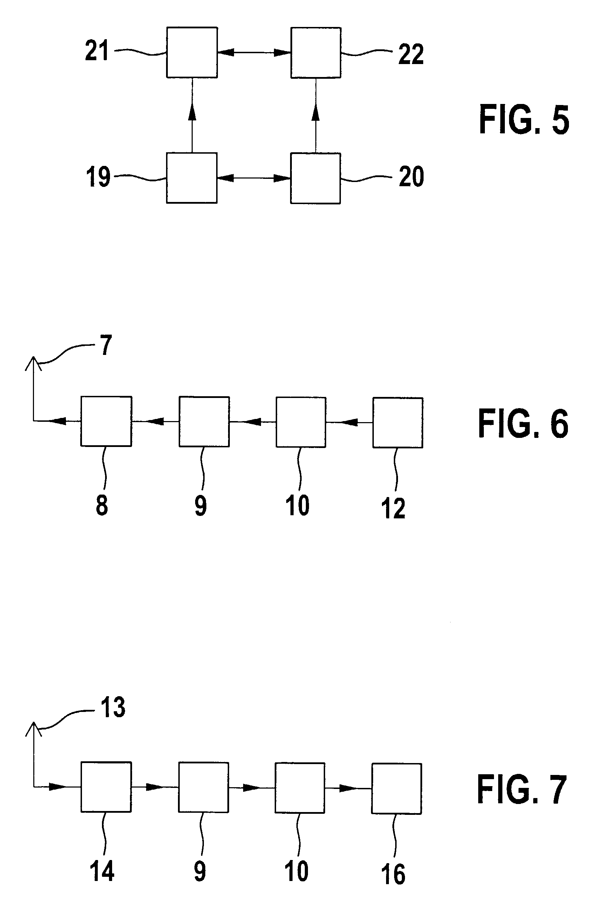

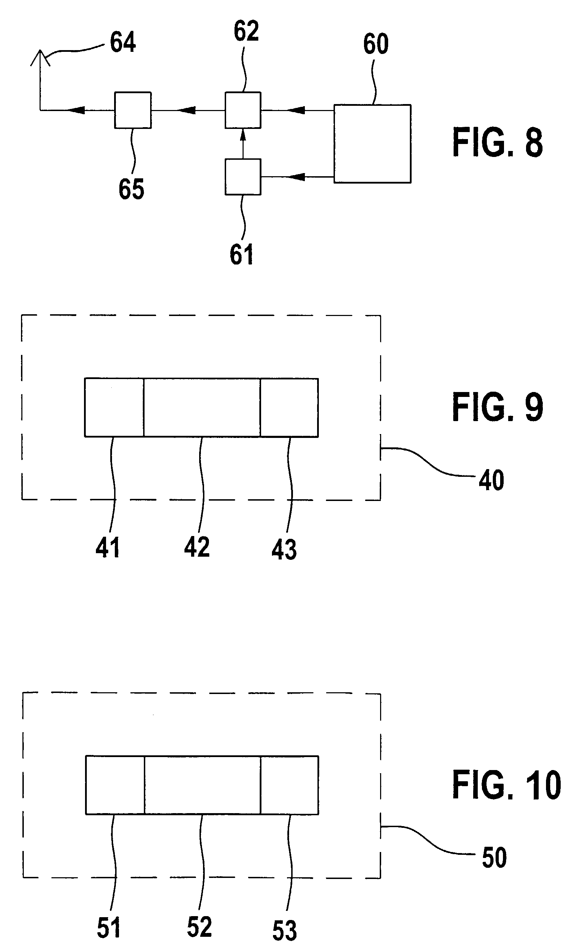

Fig. 1 shows block diagram with a control processor and a signal processor and their memory units, Fig. 2 shows a second block diagram with a control processor, a signal processor and their memory units, Fig. 3 shows a first example for an optimised data flow between control processor and signal processor in a sending station, Fig.4 shows a second example of an optimised data flow between control processor and signal processor in a sending station, Fig. 5 shows an optimised data flow between control processor and signal processor in a receiving station, Fig. 6 shows a transmitting part of a mobile station, Fig. 7 shows a receiving part of a mobile station, Fig. 8 shows an alternative configuration of the transmitting part of a mobile station, Fig. 9 an LLC frame, and Fig. 10 an RLC/MAC subframe.

### Description

Many electronic devices such as mobile phones face the requirement of data processing. Especially for mobile phones, the tasks are steadily increasing due to higher data transmission rate and better data security. A processor such as a microprocessor or a microcontroller does the processing of the data. A microprocessor is a universal processor and any computer program considering the resources of the microprocessor can run on the microprocessor. A microcontroller is a microprocessor in embedded systems optimised for controlling a process.

Often, if a lot of calculations have to be made, a second processor is added which is only used for performing calculations, whereas the first processor is supposed to control the data, e. g. sending, formatting, or receiving data. The second processor is often a digital signal processor (DSP). An DSP is a processor which is designed for a certain application, for example performing calculations with a special algorithm. Therefore, the hardware of the DSP is already adapted to this special algorithm, whereas the hardware of a microprocessor or a microcontroller is designed for performing any task that is possible to perform. Apart from the DSP, other types of processors can be used such as microprocessors or a coprocessor for an DSP. The goal is to use two or more processors in parallel in order to achieve faster processing.

The amount of data flow between a microprocessor and digital signal processor is affecting the performance of a device exhibiting those processors. Both processors are situated in a mobile phone or a base station. It is a usual split to divide control functions and heavy processing from each other in two separate processors. If data flow is small, it does not matter much to transfer data to and from, but due to an introduction of a concept of a packet switched radio network for GSM (Global System for Mobile Communication) entailing a more complex ciphering/deciphering algorithm than for circuit switched GSM, the required processing and the amount of data have been considerably increased. Therefore, the transfer of data between these two processors should be minimised. This leads then to an increased speed of processing in a GSM station such as a mobile phone or a base station. GSM is a well-known standard for mobile communication.

In Fig. 1, it is shown in a block diagram how a control processor 1 with its memory unit 17 is connected to a signal processor 2 with its memory unit 18. The control processor 1 is the above described microprocessor whereas the signal processor 2 is the above described DSP. The memory unit 17 is connected to a first input/output of the control processor 2. The control processor 2 exchanges data directly with a first input/output of the signal processor 2. A second input/output of the signal processor 2 is connected to its memory unit 18. In this way, the memory units 17 and 18 are separated from each other. All interconnections between the processors and the memory units enable data flow in both directions. If the control processor 1 and the signal processor 2 want to send data to each other, they will first notify each other that data is coming and then they will send the data.

In another configuration shown in a block diagram in Fig. 2, the control processor 1 is connected to a first input/output of its memory unit 17, a second input/output of the memory unit 17 is connected to a first input/output of the signal processor 2 and a second input/output of the signal processor 2 is connected to its memory unit 18.

Here, the signal processor 2 sees directly the memory unit 17 of the control processor 1. Therefore, the signal processor 2 fetches data directly from the memory unit 17. This technique requires to send a so-called hold signal from the signal processor 2 to the control processor 1, so that the control processor 1 does not access the memory unit 17 and therefore stops processing until the signal processor 2 sends a run signal, so that the control processor 1 continues to perform its tasks. This guarantees that both processor never try to seize the same data simultaneously, but it also prevents that both processors work in parallel when accessing only the memory unit 17. To get the benefit of two processors working in parallel, each processors needs its own memory unit. Thus the signal processor 2 transfers the data it has to process from the memory unit 17 to its memory unit 18.

Another approach is to use dual-port memory where the control processor 1 writes one part of the memory and the signal processor 2 reads the same part of the memory and vice versa.

During the data flow between the memory units of the processors, the processors and the memory units are occupied, so that they cannot do something else.

The individual functions for the data processing are assigned in communication systems to so-called protocol layers. For the packet switched radio network for GSM, a logical link control layer (LLC) and a radio link control/medium access control layer (RLC/MAC) are introduced. The LLC layer is dealing mainly with ciphering/deciphering of data and the RLC/MAC layer is dealing mainly with segmenting. But also other functions like error detection, determining data size and data formatting are performed by these layers.

Error detection is used to detect errors in a data unit. If an error is detected by a receiver, retransmission of the affected data unit will be requested. This request is only sent when the data transmission is in the so-called acknowledged mode which is used for the data to be transmitted. For signalling the so-called unacknowledged mode is used. In the unacknowledged mode, retransmission is not requested if an error is detected.

Error detection demands that the sender adds an appendix to each data unit, that is the so-called checksum. By checking this appendix the receiver determines if an error has occurred in this data unit.

The LLC layer and the RLC layer belong to the data link layer, which is the second layer in the OSI (Open System Interconnection) layer model. The OSI model deals with open communication systems. It has seven protocol layers, each layer being created where a different level of abstraction is required. Clearly specified functions are assigned to each layer. Information flow between the layers should be minimised.

The lowest layer is the physical layer including the MAC layer dealing with transmitting bits over a communication channel, for example here a radio channel. The second layer is the data link layer dealing with transmission errors. The following layers above, the network layer, the transport layer, the session layer, the presentation layer and the application layer include functions requiring higher levels of abstraction.

The data link layer divides the data coming from the layer above into blocks or frames. It takes control of the transmission of signalling data in defined formats. It has to recognize formats. Ciphering/deciphering, channel coding/decoding and error detection are also performed in this layer. For the packet switched mode for GSM, it has been decided to divide the data link layer into two sub layers, the LLC layer and the RLC layer.

The LLC layer provides a logical link channel between two communicating stations independent of existing relay stations in between. The logical link channel is therefore the channel between sender and receiver regardless of the physical channel between the sender and the receiver. Thus, the existence of a logical channel between sender and receiver entails any physical channel between sender and receiver but the logical channel is not affected by the properties of the physical channel. If a radio cell change occurs during the transmission of an LLC frame, a retransmission of the LLC frame is necessary.

A task that has to be performed by the LLC layer is to cipher or decipher the data. Ciphering means, that data is scrambled in a certain way, so that only other receiving stations, which know how this data is scrambled, can decipher this data, so that the user of, for example, a mobile phone, can understand this information. To cipher and to decipher data, a ciphering and deciphering key is used. These keys are already stored in the communicating stations. In the beginning of a communication between two stations, the stations have to determine which ciphering key will be used. Another information that is necessary to cipher/decipher a bit string is to know on which parts of the bit string the ciphering/deciphering has to be performed. In some cases, ciphering means that only parts of a data unit are ciphered because the other parts of the data unit need not to be kept confidential, since these part do not exhibit user specific data.

The ciphering/deciphering needs a lot of processing power. Therefore, an DSP is used to perform the processing for the ciphering/deciphering. In the LLC layer, error detection is also performed. If an error is detected, retransmission of the affected frames is demanded. These errors stem from operational errors in contrast to the errors related to the radio channel. The RLC/MAC layer deals with the latter errors. Since mainly errors occur due to the radio channel subframes which are used in the RLC/MAC layer are only, for example, 52 byte long whereas the LLC frames are up to 1500 byte long. It is an advantage only retransmitting small data units in order to reduce data traffic on a radio channel.

These layers, the LLC and the RLC/MAC layer, have been introduced because nowadays, the mobile system should work based on packet switched connections, and not on circuit switched connections. Circuit switched connections require to maintain a radio channel for radio communication during the whole communication, even when using a GSM network because then the data bursts are sent in certain time slots but still the radio channel must be maintained. Packet switching, however, enables that any channel needs to be maintained only during periods when sending data in bursts. By using packet switching the bandwidth is more efficiently used than in circuit switched systems.

A burst is a short time interval when data is transmitted. Between bursts no data is transmitted, so it is possible that different bursts take different paths using different relay stations from the sender to the receiver.

Packet switching enables a better use of the frequency spectrum than circuit switched systems because in circuit switched systems the actually used spectrum of communicating stations is blocked for other stations. In circuit switched systems, especially in telephony, most of the time at least one party is not talking, so the established channel is not used in that direction. Packet switching enables the use of any unused part of the allocated spectrum to transmit data to the next station. Because of packet switching transmitting stations block the spectrum for other stations only during transmission of data. Packet switching do only allocate time slots to a user for the time necessary to transmit a specified amount of data.

In the RLC/MAC layer, received data experience channel decoding and data to be sent is channel coded. Apart from this, the size of the transmitted subframes is adapted to the radio channel conditions and therefore to the chosen coding scheme. Furthermore, this layer takes care of error detection and error correction for radio related errors in the receiving station. In case of errors the subframes are transmitted again by the RLC/MAC layer in the sender, if the channel decoding could not correct every error.

The RLC/MAC subframe consists of an header, an information field and a ckecksum. The header gives for example information on the size of the information field which includes a part of the LLC frames.

The signal processor 2 works as a service station for the control processor 1. In the RLC/MAC layer, the signal processor 3 performs the processing for the checksum appendix. The control processor 1, however, is always in control, what the signal processor 2 is doing.

The relationship between the control processor 1 and the signal processor 2 is like master and slave. The control processor 1 demands services from the signal processor 2. These services consist of calculating tasks, such as ciphering/deciphering and channel coding/decoding. Therefore, when these calculations have to be made, the control processor 1 calls the signal processor 2 to perform these calculations.

In Fig. 3, an optimised data flow between the control processor 1 and the signal processor 2 in a sending station is presented. The processors appear here twice, once in the LLC layer and once in the RLC/MAC layer, a control processor 3 and 5 being on the left side and a signal processor 4 and 6 being on the right side. The control processor performs the tasks for each layer and demands the service of the signal processor when needed. So in reality there is one control processor and one signal processor in, for example, a mobile phone or a base station.

In a layer above the LLC layer, the SNDCP (Sub Network Dependent Convergence Protocol) layer, the size of the data to be sent is determined by the control processor 3. Then the data are put into LLC data frames, e. g. each at maximum 1500 bytes long, by the control processor 3, a data frame consisting of a frame header and a data field. To put data into data frames, this gives the advantage that in case of an error only the affected data frame needs to be retransmitted.

The control processor 3 calls then the signal processor 4 to calculate the checksum and to do ciphering. To enable these actions, the control processor 3 transfers the data frames from its memory unit 17 to the signal processor 4 which stores these data frames in its memory unit 18. In addition, the control processor 3 transfers the size of the data frames to the signal processor 4.

The signal processor processes then data frame after data frame in its memory. Therefore, the data frames are stored in the memory unit 18 of the signal processor 4 in the right order. Right order means that the data frames are stored one after other in the memory unit 18 of the signal processor 4.

Checksum calculation is here applied to the whole data frame but it can be the case that segments of the data frame need not to be protected that means these segments do not undergo error detection in the receiver. The checksum for error detection is here calculated for each data frame and added to each data frame as an appendix.

Ciphering is applied to the whole frame inclusive the checksum appendix but exclusive the header. Therefore, the length for the checksum which is always the same is added to the data frame size. The ciphering is done after a rule, the ciphering key, telling how to scramble the individual bits. This ciphering key and the direction in the frames in which the ciphering should be performed are transferred from the control processor 3 to the signal processor 4. After performing the ciphering, the signal processor 4 stores the ciphered data in its memory unit 18. Alternatively, the ciphering can be applied to some segments of the frame.

The chosen channel coding scheme determines the size of subframes used as a data unit in the RLC/MAC layer. The size for the subframe is here 52 byte but other sizes for the subframe are also possible.

The control processor 5 calls then the signal processor 6 to perform the channel coding. For the channel coding, the control processor 5 transfers the information which subframe is next to be channel coded to the signal processor 6, then the signal processor 6 does the channel coding on this subframe and waits then for the information on the next subframe. Alternatively, the signal processor 6 gets the size of the subframes from the control processor 5 and does the channel coding for every subframe, one after the other.

After finishing the channel coding, the control processor 5 calls the signal processor 6 to transfer the data to a transmitting unit.

If the processors are in a sending station, the signal processor 4 fetches the data to be sent from the memory unit of the control processor 3 to the memory unit of the signal processor 4, if the configuration in Fig. 2 is implemented. To fetch the data from the memory unit of the control processor, the signal processor gets a pointer on the data stored in the memory unit of the control processor, so that the signal processor can directly fetch the data from the memory unit of the control processor.

If the processors and the memory units are arranged as it is described for Fig. 1, the control processor 3 sends the data from its memory unit to the signal processor 4 which stores the data in its memory unit.

If the processors are in a receiving station, the data will be transferred from the memory unit of the signal processor 5 to the memory unit of the control processor 3. For the configuration described in Fig. 1, the signal processor sends the data to the control processor. If the processors and their memory units are arranged as shown in Fig. 2, the signal processor transfers the data from its memory unit to the memory unit of the control processor and sends a pointer on the transferred data to the control processor. In this way, the control processor can directly access in its memory unit the transferred data.

In Fig.4, another embodiment of an optimised data flow between control processor and signal processor in a sending station is depicted. The control processor 3 keeps the control data, data frame size, ciphering key and ciphering direction, for its tasks during performing the functions for the LLC layer and the necessary control data, coding scheme and subframe size, for performing the tasks of the RLC/MAC layer. After determining the control data for the RLC/MAC layer the control processor 5 calls the signal processor 6 to perform the processing for both the LLC layer and the RLC/MAC layer. This includes calculating checksum, adding checksum to the frames, ciphering and channel coding for data to be sent and transferring the data to the transmitting unit.

In Fig. 5, the corresponding data flow in a receiving station is presented. The control processor is on the left side, whereas the signal processor is on the right side. The processors appear twice because they perform the tasks for both the LLC layer (above) and RLC/MAC layer (below). In reality, there is only one control processor and one signal processor. The data flow between the processors is in both directions.

In the RLC/MAC layer, a signal processor 20 stores the received data coming from a receiving unit in its memory unit. The signal processor 20 transfers an RLC/MAC subframe header information of the received data to a control processor 19, so that the control processor 19 determines the data size, the data frame size, the subframe size, and the channel coding scheme from the RLC/MAC header information. For this, the signal processor 20 is always aware of the subframe header size. A subframe header always heads the data in the memory unit 18 of the signal processor 20.

Alternatively, the control processor 19 is always informed on the control data, the subframe size, the channel decoding scheme, the data frame size, the checksum size, the deciphering key, the deciphering direction and the data header size because these control data are always used.

Then the control processor 19 calls the signal processor 20 to perform channel decoding on the received data and transfers the subframe size, the subframe header size and the necessary channel decoding scheme to the signal processor 20 in order to perform the channel decoding. The signal processor does the channel decoding for every subframe and thereby corrects detected errors. If an error correction fails, the control processor 19 may ask for retransmission of the affected data in a subframe by the sending station by sending a message to the sending station. After the channel decoding, the signal processor 20 keeps the data in its memory unit and strips the subframes from their headers because they are no longer needed.

In the LLC layer, the control processor 21 calls the signal processor 22 to perform the deciphering and error detection. Therefore, the control processor 21 transfers control data such as the deciphering key and the deciphering direction as well as the data frame size from its memory unit to the memory unit of the signal processor 22. The signal processor 22 performs then deciphering using the deciphering key, the deciphering direction, the data frame size and the checksum size and error detection on every data frame with its checksum stored in its memory unit, the data frames comprising the channel decoded subframes and the checksums being included in the channel decoded subframes.

For calculating the error detection, the signal processor 22 uses the checksums. If errors are detected, the control processor 21 will submit a message to the sending station to retransmit the affected data frame. After the error detection, the checksum is deleted from the data frames. Then, the control processor 21 calls for transferring the deciphered and error detected data frames from the signal processor 22 to the control processor 21. Finally, the control processor strips the data frame header from the data frames and puts the remaining data together to the original data unit in the SNDCP layer.

Alternatively, the control processor 19 transfers the necessary control data, the subframe size, the channel decoding scheme, the data frame size, the checksum size, the deciphering key and the deciphering direction to the signal processor 20 before the signal processor calculates the channel decoding. Then, the signal processor is able to perform channel decoding, deciphering and error detection one after the other without waiting for control data from the control processor.

If segments of the data frames are ciphered and error protected by using a checksum for every error protected segment, then the control processor must transfer control data which segments are to be deciphered and on which segments error detection has to be performed. For example, the control processor transfers the bit positions in the data frames to the signal processor. Then, the signal processor counts the bit positions where to start deciphering and error detection using the data frame size.

The optimised data flows presented in Fig. 3, Fig. 4 and Fig. 5 show the advantage that the data to be processed is transferred only once from the memory unit 17 of the control processor to the memory unit 18 of the signal processor in a sending station and from the memory unit 18 of the signal processor to the memory unit 17 of the control processor in a receiving station.

The transmitting part of a mobile station is shown in a block diagram in Fig. 6. A data input unit 12 is connected to a microcontroller 10, so that the data flows into the microcontroller 10. The microcontroller 10 takes care of the processing, especially in the LLC and RLC/MAC layers. The microcontroller 10 is the control processor mentioned above. The microcontroller 10 uses a digital signal processor 9 for the calculations for ciphering/deciphering, calculating checksum and channel coding/decoding. The DSP 9 is the signal processor mentioned above. From the digital signal processor 9 after all the processing, the data are then transferred to a transmitting unit 8. In the transmitting unit 8, the data stream is converted into radio signals which are then emitted by use of an antenna 7. The microcontroller 10 is only transferring once the data to be sent from its memory unit to a memory unit of the digital signal processor 9, as it is shown in Fig. 1 and Fig. 2.

The receiving part of a mobile station is shown in Fig. 7. By an antenna 13 the radio signals are received. The antenna 13 is connected to a receiving unit 14. The received radio signals come from the antenna 13 to a receiving unit 14. In the receiving unit 14, the radio signals are filtered, amplified and downconverted to a lower frequency. Alternatively, the radio signals may also be processed in the frequency band used for reception. Apart from this, they are also digitized. In this way, a data stream is created.

The receiving unit 14 is connected to an DSP 9. The data stream created by the receiving unit 14 flows into the DSP 9. The DSP stores the data in its memory unit. By using the method described in Fig. 5 for receiving stations, the DSP 9 and a microcontroller 10 being connected to the DSP 9 perform together the described tasks. After performing these tasks, the data are transferred from the DSP 9 to the microcontroller 10. From the microcontroller 10, the data is transferred to a data output unit 15 where the data are ready for further processing.

In Fig. 8, an alternative configuration for the transmitting part in a mobile station is shown. A data input unit 60 is connected via its first data output to a microcontroller 61 and via its second data output to a DSP 62. Consequently, the data input unit 60 transmits only necessary control data to the microcontroller 61 and the necessary control data and data to be transmitted to the DSP 62, so that both the microcontroller 61 and the DSP 62 perform their designated tasks described above in order to process the data but the microcontroller 61 does not transfer the data to the DSP 62. After performing their tasks and a transfer of control data from the microcontroller 61 to the DSP 62, the DSP 62 transfers the processed data to a transmitting unit 63 which prepares the data for radio transmission by use of an antenna 64 which is connected to the transmitting unit 63.

A corresponding receiving part of a mobile station exhibits a receiving unit having two outputs one connected to a microcontroller and the other connected to a DSP.

In Fig. 9, the frame structure of an LLC frame 40 is presented. The LLC frame 40 exhibits a header 41 giving size information, a user data field 42 showing the actual data to be sent, and a field for the checksum being used for error detection.

In Fig. 10, the structure of an RLC/MAC subframe 50 is shown. The RLC/MAC subframe exhibits a header 51 giving size information and coding information, a user data field 52 and an optional field 53 for checksum for error detection.

## Claims

1. Method for sending data over a packet switched radio network, a signal processor (2) being used and controlled by a control processor (1), the said control processor (1) and the said signal processor (2) each being assigned its own memory units (17, 18), comprising the steps of:
- said signal processor (2) receiving data frames comprising data frame headers (41) and data, a data frame size, a ciphering key, a channel coding scheme and a subframe size from the said control processor (1),
- said signal processor (2) calculating checksums for the data frames using said data frame size and storing the data frames and the checksums in its memory unit (18),
- said signal processor (2) calculating ciphered frames from said data frames and the checksum of each data frame, using the ciphering key and a ciphering direction, and storing the ciphered frames in its memory unit (18),
- said signal processor (2) calculating channel coded subframes from said ciphered frames using the channel coding scheme and the subframe size and transferring the channel coded subframes to a transmitting unit (8).

2. A method according to claim 1 comprising a first step that the said signal processor (2) receives the data frames comprising the data frame headers (41) and the data, the data frame size, the ciphering key, the ciphering direction, the channel coding scheme and the subframe size from the said control processor (1), a second step that the said signal processor (2) calculates the checksums for the data frames using said data frame size and stores the data frames and the checksums in its memory unit (18), a third step that the said signal processor (2) calculates ciphered frames from said data frames and the ciphered checksum of each data frame, using the ciphering key and the ciphering direction, and stores the ciphered frames in its memory unit (18), and a fourth step that the said signal processor (2) calculates channel coded subframes from said ciphered frames using the channel coding scheme and the subframe size and transfers the channel coded subframes to the transmitting unit (8).

3. A method according to claim 1 comprising a first step that the said signal processor (2) receives the data frame, comprising the data frame headers and the data, and the data frame size, a second step that the said signal processor (2) calculates the checksums for the data frames using the data frame size and stores the data frames and the checksum for each data frame in its memory unit (18), a third step that the said signal processor (2) receives the ciphering key from the said control processor (1), a fourth step that the said signal processor (2) performs ciphering on the data frames and their checksums using the ciphering key and the ciphering direction and stores the ciphered frames comprising the data frames and their checksums in its memory unit (18), a fifth step that the said signal processor (2) receives the channel coding scheme and the subframe size from the said control processor (1), a sixth step that the said signal processor (2) divides the ciphered frames using the subframe size into subframes and performs channel coding on the subframes using the channel coding scheme, and a seventh step that the said signal processor (2) transfers the channel coded subframes to the transmitting unit (8) .

4. A method according to claim 2 or 3 wherein the said signal processor calculates a checksum for each subframe while performing the channel coding and transfers the subframes with its checksum to the transmitting unit (8).

5. A method for receiving data over a packet switched radio network, a signal processor (2) being used and controlled by a control processor (1), the said control processor (1) and the said signal processor (2) each being assigned its own memory units (17, 18), comprising the steps of:
- said signal processor (2) storing data coming from a receiving unit (14) in its memory unit (18),
- said signal processor (2) receiving a channel decoding scheme, a subframe size, a deciphering key, a data frame size, a data frame header size and a checksum size from the said control processor (1)
- said signal processor (2) performing channel decoding on the data in its memory unit (18) to get channel decoded subframes using the channel decoded scheme and the subframe size and storing channel decoded subframes in the memory unit (18),
- the said signal processor (2) performing deciphering of frames comprising the channel decoded subframes and their checksums being included in the channel decoded subframes using the deciphering key, a deciphering direction, data frame size and the checksum size and storing of the deciphered frames comprising the data frames and their checksums in the memory unit (18),
- said signal processor (2) performing error detection on the deciphered frames using the checksums (43) and signalling to the said control processor (2) which data frames exhibit errors,
- said control processor (1) requesting retransmission of the data frames exhibiting errors,
- said signal processor (2) removing the checksums from each frame and transferring the data from the memory unit (18) to the said control processor (1).

6. Method according to claim 5 comprising a first step that the said signal processor (2) stores the data coming from the receiving unit (14), a second step that the said signal processor (2) receives the channel decoding scheme, the subframe size, the deciphering key, the data frame size, the data frame header size and the checksum size from the said control processor (1), a third step that the said signal processor (2) performs channel decoding on the data in its memory unit (18) to get channel decoded subframes using the channel decoded scheme and the subframe size and stores the channel decoded subframes in the memory unit (18), a fourth step that the said signal processor (2) performs deciphering of the frames comprising the channel decoded subframes and their checksums being included in the channel decoded subframes using the deciphering key, the data frame size and the checksum size and stores the deciphered frames comprising the data frames and their checksums in the memory unit (18), a fifth step that the said signal processor (2) performs error detection on the deciphered data frames using the deciphered checksums (43) and signals to the said control processor (2) which data frames exhibit errors, a sixth step that the said control processor (1) requests retransmission of the data frames exhibiting errors, and a seventh step that the said signal processor (2) removes the checksums from each data frame and transfers the data frames from the memory unit (18) to the said control processor (1).

7. A method according to claim 5 comprising a first step that the said signal processor (2) stores the data coming from the receiving unit (14), a second step that the said signal processor (2) receives the channel decoding scheme and the subframe size from the said control processor (1), a third step that the said signal processor (2) performs channel decoding on the stored data using the channel decoding scheme and the subframe size in order to get channel decoded subframes and stores the channel decoded subframes in its memory unit (18), a fourth step that the said signal processor receives the deciphering key, the data frame size and the checksum size from the said control processor (1), a fifth step that the said signal processor (2) performs deciphering on the frames comprising the channel decoded subframes with their checksums being included in the channel decoded subframes using the deciphering key, the deciphering direction, the data frame size and the checksum size and stores the deciphered frames comprising the data frames and the checksums in its memory unit (18), a sixth step that the said signal processor (2) performs error detection on the deciphered data frames using the deciphered checksums and signals the said control processor (1) which data frame exhibits errors, a seventh step that the said control processor (1) requests retransmission of the data frames exhibiting errors, and an eighth step that the said signal processor (2) removes the checksums and transfers the data frames to the said control processor (1).

8. A method according to claim 5, 6 or 7 wherein the said signal processor (2) performs error detection on each subframe using a checksum after the channel decoding.

9. A method according to claim 5, 6 or 7 wherein the data frame and the subframe consist each of a header, a user data field and a field for the checksum.
